# EUROPEAN PATENT APPLICATION

(11) **EP 4 700 348 A1**
(43) Date of publication of application: **25.02.2026**
(21) Application number: 25192707.5
(22) Date of filing: 30.07.2025
(51) Int. Cl.: G01J 11/00, H01S 3/00

(54) **METHOD AND APPARATUS FOR ANALYZING A BEAM USING CHARACTERIZATION OF AN ULTRAFAST REFERENCE LASER**

(30) Priority: 24.08.2024 US 202418814505
(71) Applicant: Mesa Photonics, LLC, Santa Fe, NM 87505 (US)
(72) Inventor: Kane, Daniel J., Santa Fe, NM 87505 (US); Wernsing, Keith A., Santa Fe, NM 87505 (US)
(74) Representative: Appelt, Christian W.

(57) **Abstract**

A cross-correlation frequency resolved optical gating (X-FROG) system causes a reference beam and an unknown beam to interact within a nonlinear medium in a cross-correlation or multiplication to produce X-FROG spectra and an X-FROG spectrogram. A dedicated frequency resolved optical gating (FROG) system is included within the apparatus to characterize the reference beam and to provide that characterization information to the computer or other processor that performs phase retrieval on the X-FROG spectrogram. A single reference beam is directed into the system and is split three ways by a zero dispersion difference beamsplitter, with a portion of the reference beam directed into the FROG system and a portion of the reference beam directed into the X-FROG system. The apparatus includes a trigger for initiating the reference beam characterization.

## Description

### GOVERNMENT RIGHTS

This invention was made with government support under DE-SC0021499 awarded by the U.S. Department of Energy. The government has certain rights in the invention.

### RELATED ART

Ultrafast laser systems have many applications in biochemistry, chemistry, physics, and electrical engineering. These systems generate laser pulses with durations often picoseconds or less that can be used, for example, in machining materials and are used to explore kinetics in proteins, examine carrier relaxation in semiconductors, or image through turbid media. They are also used as an ultrafast probe in electronic circuits. By using ultrafast diagnostic systems, highly advanced semiconductors, electronic circuitry, and even biomedical products can be developed and tested for commercial applications. New applications are being developed that require ultrashort pulses shaped in both intensity and phase. The continued development of these applications will require fast, high quality, and easy-to-use ultrafast laser pulse diagnostics. Traditional time domain analysis of ultrafast systems is generally inadequate because of insufficient speed and other limitations in detectors and electronics.

Frequency-resolved optical gating (FROG) is an ultrafast laser diagnostic that can determine the intensity and phase of an ultrashort laser pulse. FROG measures the spectrum of a particular temporal component of an optical pulse by spectrally resolving the signal pulse in an autocorrelation-type experiment using an interaction within a nonlinear medium. The FROG system produces a spectrogram of an input pulse that is a three-dimensional plot of intensity versus frequency and time delay, showing the spectral variations of time slices of the pulse. An input pulse, or wave, is split into two identical pulses (waves) using a beam splitter. One of the pulses is delayed in time relative to the other and combined within a nonlinear medium that multiplies the two pulses together, so that one pulse gates a portion of the other pulse. The FROG system spectrally resolves the gated signal and records the spectrum as a function of relative time delay to form a spectrogram.

Any medium that provides a nonlinear interaction may be used to implement FROG and may be, for example, an instantaneously responding χ⁽³⁾ or χ⁽²⁾ medium. For some FROG geometries and phase retrieval strategies, there is no need for the nonlinear medium to exhibit an instantaneous response. An intuitive illustration of how the FROG system operates is a medium and configuration for polarization gating. For a typical polarization-gating configuration, induced birefringence due to the optical Kerr effect is the nonlinear-optical interaction. The "gate" pulse causes an χ⁽³⁾ medium, which is placed between two crossed polarizers, to become slightly birefringent. The polarization of the "gated" probe pulse (which is cleaned up by passing through the first polarizer) is rotated slightly by the induced birefringence, allowing some of the "gated" pulse to leak through the second polarizer. This is referred to as the signal. Because most of the signal emanates from the region of temporal overlap between the gate pulse and the probe pulse, the signal pulse contains the frequencies of the "gated" probe pulse within this overlap region. The signal is then spectrally resolved, and the signal intensity is measured as a function of wavelength and delay time τ. The resulting trace of intensity versus frequency and delay is a spectrogram, a frequency- and time-resolved transform that intuitively displays the time-dependent spectral information of a waveform.

FROG is not limited to the optical Kerr effect. Second harmonic generation (SHG) FROG can be constructed to analyze relatively weak pulses from oscillators and is typically more sensitive than polarization-gating FROG. SHG FROG combines the unknown input pulse with delayed replicas of the pulse in an SHG crystal (the nonlinear medium) to produce SHG signals that are collected as the spectrogram for SHG FROG.

While the FROG system-obtained spectrogram of the pulse serves as an intuitive display of the pulse, it is difficult to obtain quantitative information about the pulse from the spectrogram. Subtleties in the pulse structure may go unnoticed without knowledge of the actual pulse. To obtain the original pulse from its spectrogram, the phase of the spectrogram is determined using two-dimensional phase retrieval. U.S. Patent No. 7,130,052 is entitled "Real-Time Measurement of Ultrashort Laser Pulses" and describes a frequency resolved optical gating (FROG) system and methods of using that system for the real time analysis of ultrafast laser pulses. While the '052 patent mentions various phase retrieval strategies, the patent emphasizes the principal components generalized projections (PCGP) strategy. The PCGP strategy is an iterative two-dimensional phase retrieval process for analyzing the spectrogram data obtained by a FROG system. In the '052 patent, PCGP is used to reconstruct the characteristics of an unknown input ultrafast laser pulse from the FROG data. Programs for analyzing FROG data in this manner are commercially available.

Cross-correlation FROG (X-FROG) uses a spectrally resolved cross-correlation between a known ultrafast laser pulse and an unknown ultrafast laser pulse to characterize the unknown pulse. There are several advantages to using a known pulse to characterize an unknown pulse. Wider wavelength ranges of ultrafast laser pulses can be measured; mid-infrared pulses can be mixed with different wavelength pulses to shift the measurement to inexpensive detectors. Complex, wide bandwidth ultrafast laser pulses, such as continua, can be characterized. Weak pulses can be measured by being cross-correlated with higher power pulses. X-FROG can be viewed as a special case of the general FROG strategy, but some modifications are needed to take advantage of the information about the known reference pulse. Like FROG, the extraction of the unknown pulse characteristics in X-FROG is usually accomplished using two-dimensional phase retrieval.

X-FROG uses a known reference pulse or gate function to interrogate an unknown pulse in a cross-correlation configuration, with the reference or gate pulse interacting with the unknown pulse in a selected nonlinear medium. At each time delay between the gate pulse and the unknown pulse, the X-FROG system measures the spectrum resulting from the nonlinear interaction of the gate pulse and the unknown pulse. This forms a spectrogram of the unknown pulse where the reference or gate pulse is the gating function for the spectrogram. Since the reference pulse (gate) is known a priori and is cross-correlated with the unknown pulse to create the X-FROG trace, extraction of the unknown pulse is easier. In the case of the standard generalized projections strategy, where a function is minimized, the known reference pulse (gate) is just part of the minimized equation.

Applying the PCGP strategy to X-FROG it is not straight forward because the PCGP strategy is naturally blind-the unknown pulse and the gate pulse are found independently and no a priori information about the gate pulse is used. While blind deconvolution may be used to find both the pulse and gate, this process is prone to error especially in the case of similar pulse shapes and durations; therefore, it would be much better to use the information about the gate (known reference pulse) in a phase retrieval. U.S. Patent No. 9,423,307 is entitled "Method and Apparatus for Determining Wave Characteristics Using Interaction with a Known Wave," and describes an X-FROG system in which a known cross-reference input pulse is used to analyze an unknown laser pulse, which may be an ultrafast laser pulse. The '307 patent further describes analysis of data obtained by the X-FROG system using a modified version of the PCGP strategy to reconstruct the characteristics of the input unknown laser pulse using information known about the reference pulse.

U.S. Patent No. 11,362,481 is entitled "Method and Apparatus for Measuring Optical Pulses," and describes a sonogram pulse analysis system, which generates data generally similar to the data generated by a FROG or X-FROG system. The '481 patent illustrates a data analysis strategy known as ptychography applied to sonogram data. Spectrograms are similar to sonograms; ptychography can similarly analyze spectrogram data.

M. Guesmi, et al., "Targeted Generation of Complex Temporal Pulse Profiles," Sci. Rep. (www.nature.com), vol. 12, 3827, 2022, downloaded from https://doi.org/10.1038/s41598-022-07875-0, describes a system that characterizes beam shaping accomplished by a 4*f* pulse shaper on a femtosecond optical pulse waveform. The Guesmi, et al., article describes a characterization system providing both scanning FROG and scanning X-FROG functionality using common optics and assemblies for the two techniques. The described characterization system uses a common nonlinear medium for the FROG and X-FROG strategies and performs FROG and X-FROG analysis using pulses temporally offset from one another. Amongst other strategies, the Guesmi, et al., article identified ptychography as a possible data analysis technique for either the FROG or X-FROG trace.

### SUMMARY OF THE PREFERRED EMBODIMENTS

According to an embodiment, an optical apparatus for characterizing ultrafast pulses comprises a first entrance port that receives one or more reference pulses and a second entrance port that receives one or more unknown pulses. The optical apparatus includes a beam splitter positioned to receive the one or more reference pulses from the first entrance port, where the beam splitter splits each reference pulse into at least two copies. A self-referencing characterization system is positioned to receive one or more reference pulse copies from the beam splitter. The self-referencing characterization system is configured to optically process the one or more reference pulse copies to generate a reference interaction signal characteristic of the one or more reference pulses, and the self-referencing characterization system provides the reference interaction signal to a reference interaction detector that converts the reference interaction signal to an electrical reference interaction signal. The optical apparatus further includes a spectrally resolved cross-correlation characterization system positioned to receive one or more reference pulse copies from the beam splitter and to receive one or more unknown pulses provided through the second entrance port. The spectrally resolved cross-correlation characterization system comprises a nonlinear medium and optically processes the one or more reference pulse copies and the one or more unknown pulses so that the one or more reference pulse copies and the one or more unknown pulses interact within the nonlinear medium to produce a cross-correlation interaction signal. The spectrally resolved cross-correlation characterization system directs the cross-correlation interaction signal to a cross-correlation interaction detector that converts the cross-correlation interaction signal to an electrical cross-correlation interaction signal.

According to another embodiment, an optical apparatus includes a frequency resolved optical gating (FROG) assembly and a cross-correlation frequency resolved optical gating (X-FROG) assembly. The apparatus includes a beam splitter positioned to receive a reference pulse. The beam splitter defines an optical path for the reference pulse to the FROG assembly and the beam splitter defines another optical path for the reference pulse to the X-FROG assembly. The FROG assembly defines a first optical path for passing a first portion of the reference pulse to a FROG nonlinear medium and a second optical path for passing a second portion of the reference pulse through optics mounted to a translation stage and to the FROG nonlinear medium. The translation stage operates under program control to introduce incremental delays between the first optical path and the second optical path. The FROG assembly also includes FROG collection optics to collect a FROG signal from the FROG nonlinear medium and to direct the FROG signal to a FROG spectrometer, wherein the FROG spectrometer generates a spectrum responsive to light from the FROG collection optics. The X-FROG assembly defines a third optical path for passing a third portion of the reference pulse to an X-FROG nonlinear medium and a fourth optical path to receive an unknown pulse and to direct the unknown pulse to the X-FROG nonlinear medium. An X-FROG translation stage operates under program control to introduce incremental delays between the third optical path and the fourth optical path. X-FROG collection optics collect an X-FROG signal from the X-FROG nonlinear medium and to direct the X-FROG signal to an X-FROG spectrometer, wherein the X-FROG spectrometer generates a spectrum responsive to light from the X-FROG collection optics.

In a more specific preferred embodiment, the apparatus includes a computer responsive to a plurality of the FROG signals to perform phase retrieval and generate reference information characteristic of the reference pulse. The computer is further responsive to a plurality of the X-FROG signals to perform phase retrieval that generates information characteristic of the unknown pulse using the reference information.

### BRIEF DESCRIPTION OF DRAWINGS

The accompanying drawings illustrate aspects of the described embodiments and are incorporated into and form a part of this disclosure. The drawings are illustrative and are not to be construed as limiting.
FIG. 1 is a schematic illustration of an apparatus providing FROG analysis of a reference pulse and X-FROG analysis of an unknown, typically ultrafast, laser pulse using that reference pulse and the FROG system's analysis of the reference pulse.
FIG. 2 schematically illustrates a shearing type beam splitter capable of producing multiple copies of an incident beam with substantially no dispersion differences in the split beams.
FIG. 3 shows aspects of a 4*f* image relay that can be used in FROG or X-FROG systems to improve robustness and reduce sensitivity to changes in the wavelength of one or more of the beams used in the systems.
FIG. 4 schematically illustrates an apparatus providing FROG analysis of a reference pulse and X-FROG analysis of an unknown, typically ultrafast, laser pulse using that reference pulse and the FROG system's analysis of the reference pulse.
FIG. 5 schematically illustrates a pulse shaper that can be used in the FIG. 4 system to alter a reference pulse.

### DETAILED DESCRIPTION OF THE PREFERRED EMBODIMENTS

Developments in the field of ultrafast light sources have produced light sources with more varied wavelength outputs. These more varied light sources present challenges to some ultrafast laser diagnostics, particularly when the light source to be characterized is at a wavelength or intensity inconsistent with readily available detectors or spectrometers. Difficulties might also arise if it is desirable to use the ultrafast laser diagnostic on a range of pulse durations, some of which may be longer than ultrafast pulses. Spectrally resolved cross-correlation characterization systems more readily accommodate different wavelengths of unknown light pulses, in part because they perform cross-correlation-like measurements against a typically fixed-wavelength reference light source. An example of such a spectrally resolved cross-correlation characterization system is a cross-correlation frequency optical gating (X-FROG) system. Similarly, a spectrally resolved cross-correlation characterization system can more readily accommodate different durations of unknown light pulses, in part because it performs cross-correlation-like measurements against a reference light source with a desirable and fixed pulse length.

X-FROG systems generally use a well-characterized reference light pulse to effectively characterize an unknown light pulse. It is often challenging to obtain a high-quality characterization of a reference pulse in a manner relevant to a later X-FROG measurement made using a moved or realigned reference pulse light source. Certain preferred embodiments provide an apparatus with an X-FROG system and a self-reference pulse analysis system that characterizes the reference pulse in a manner that can be used in analysis of the X-FROG measurement. The apparatus preferably receives a reference pulse and both characterizes that reference pulse and uses that reference pulse in an X-FROG measurement, most preferably without realignment of the reference pulse, reconfiguration of the apparatus, or excessive time passing from the reference pulse's optical measurement to when the reference pulse is provided to the optics of the X-FROG system.

Preferably, the apparatus uses at least in part separate optical systems for the reference pulse characterization and the spectrally resolved cross-correlation characterization of the unknown pulse using the reference pulse. In particular, when both of the reference and the unknown pulse characterization systems use nonlinear media, the apparatus preferably provides physically separate nonlinear media so that the cross-correlation media can be selected according to characteristics of the unknown pulse. This provides greater overall flexibility for the apparatus. In some embodiments that use scanning reference and unknown pulse characterization systems, it may be desirable to use a common delay stage between the two systems for current cost considerations. When that is done, the computer or controller preferably keeps track of the reference pulse and unknown pulse data sets.

An exemplary implementation of the present invention may provide, for example, an apparatus with a frequency resolved optical gating (FROG) system in combination with a cross-correlation frequency resolved optical gating (X-FROG) system. Here the FROG system is used as an example of an appropriate self-referencing characterization system for the apparatus; other self-referencing characterization systems might alternately be used. Similarly, the X-FROG system is used as an example of an appropriate spectrally resolved cross-correlation characterization system for the apparatus; other spectrally resolved cross-correlation characterization systems might alternately be used. The exemplary apparatus may receive a reference ultrafast laser pulse at a first port and an unknown laser pulse, such as an unknown ultrafast laser pulse, at a second port. The input reference laser pulse passes from the first port to a beam splitter, which splits the reference pulse into a first component that passes to the self-referencing FROG system and into a second component that passes to an X-FROG system. The FROG system optically processes the first component of the reference pulse to form a spectrogram corresponding to the reference pulse. Phase retrieval processing of the reference pulse spectrogram characterizes the reference pulse, with information about the reference pulse stored in a memory for use in analysis of the X-FROG trace. The second component of the reference pulse passes from the beam splitter to the X-FROG system. The X-FROG system directs the unknown ultrafast laser pulse and the second component of the reference pulse to a nonlinear medium to provide a cross-correlation between the two pulses. In an exemplary scanning X-FROG system, incremental relative delays are introduced between the second component of the reference pulse and the unknown laser pulse to produce an X-FROG spectrogram corresponding to the reference pulse and the unknown laser pulse. Phase retrieval processing on the X-FROG trace data uses the stored information about the reference pulse to facilitate characterization of the unknown ultrafast laser pulse.

X-FROG systems are sensitive to the quality of information about the reference pulse available to analyze the X-FROG spectrogram. It is accordingly advantageous to provide an X-FROG apparatus with a dedicated self-referencing characterization system, such as a FROG system, that can characterize the reference pulse used by the X-FROG system. Typically, the self-referencing characterization system characterizes the reference pulse and stores that information, and the X-FROG system uses the stored reference pulse information for phase retrieval on the unknown pulse. Because the apparatus incorporates a self-referencing characterization system aligned to receive the reference pulse that is used by the X-FROG system, the characterization of the reference pulse can be repeated regularly or when necessary to improve or confirm performance of the X-FROG system.

In some preferred implementations, at least the pulse manipulation, interaction and signal collection of the self-referencing reference pulse characterization and at least the spectrogram collection of the X-FROG unknown pulse characterization can be performed in overlapping time periods. This includes the typical practice of averaging pulse measurements over many individual pulse repetitions. In this way, the two characterizations can be performed at least partially at the same time. As a practical matter, it is generally useful to perform phase retrieval on the self-referencing characterization of the reference pulse prior to phase retrieval on the X-FROG spectrogram so that the information about the reference pulse can be used in the phase retrieval on the X-FROG spectrogram.

While preferred implementations are well suited to characterize ultrafast laser pulses, at least some implementations are well suited to analyze and characterize a broad range of pulse durations, from ultrafast pulses up to pulses of a few hundred picoseconds in duration.

In certain implementations, the system or its method of use can modify the reference pulse to provide a modified reference pulse with characteristics suited to a particular X-FROG measurement. Desirable modifications could be spectral or temporal. For example, if the X-FROG system is to measure a narrowband unknown pulse, it can be advantageous to spectrally broaden the reference pulse to reduce the demands on the spectral resolution of the spectrometer. Temporal modifications may include lengthening the duration of the reference pulse when the unknown pulse has a long duration pulse to reduce the number of discrete delay positions needed for the X-FROG measurement. Certain preferred embodiments may direct the reference pulse into a pulse conditioner prior to the system splitting the now-conditioned reference pulse and directing the split conditioned reference pulses into the respective FROG and X-FROG measurements. Pulse conditioning may, for example, include shaping the reference pulse or increasing the temporal duration of the reference pulse. In some embodiments, reference pulse conditioning can be accomplished with a comparatively simple element such as an interference filter or, in other situations, sufficient pulse conditioning might be accomplished with a planar glass element.

Some implementations of the apparatus that incorporate a pulse conditioner preferably are adapted to generate feedback as to the appropriateness of the reference pulse modification to the X-FROG measurement. The feedback may be provided to a user, for example, through a display and the user may alter one or more characteristics of the apparatus in response to the feedback. Alternately, the feedback may be provided to a controller or computer and the controller or computer may react to the feedback by altering one or more characteristics of the reference pulse. Subsequent operation of the apparatus may generate further feedback as to the appropriateness of the reference pulse conditioning to the X-FROG measurement and the user or the controller or computer may react to that further feedback.

For some implementations, the apparatus may use any of the various types of beam splitters to divide the reference pulse for use by the respective self-referencing characterization system and by the spectrally resolved cross-correlation characterization system. On the other hand, in some preferred implementations, it can be advantageous for the apparatus to split the reference pulse in a zero-dispersion difference manner to ensure that the reference pulse analyzed by the self-referencing characterization system has the same dispersion as the reference pulse used for the spectrally resolved cross-correlation characterization system. One way of effecting zero dispersion difference beam splitting is to cylindrically expand the input reference pulse to have a laterally oval shape. The system preferably splits the expanded, oval reference pulse into three components using a pair of D mirrors (i.e., mirrors shaped like a D) with an aperture between the linear edges of the D mirrors. Preferably the linear edges of the D-mirrors are configured to have a "knife edge" and preferably the reflective coating of the mirrors goes to the "knife edge" to reduce scattering from the edge. The central aperture passes a central component of the split reference pulse, which is directed into the spectrally resolved cross-correlation characterization system. The D mirrors direct the right and left components of the split reference pulse to the self-referencing characterization system as the one or two copies of the reference pulse used by the self-referencing characterization system to generate its reference interaction signal. Preferably, the split components of the reference pulse are further optically directed (within both the self-referencing characterization and spectrally resolved cross-correlation characterization systems) using mirror reflections until incident on the respective nonlinear media to limit or avoid added dispersion. Appropriate mirrors that direct light without introducing dispersion differences include metal surface mirrors and appropriate dielectric-coated mirrors.

Another implementation of a shearing beam splitter can use a pair of square mirrors and the native, generally round, cross section of the reference beam without lateral expansion. Preferably the inner positioned edges of the square mirrors similarly have "knife edges" and are mirrored to those "knife edges." If the self-referencing characterization system does not use two copies of the reference pulse, then only one pickoff mirror might be used in the shearing beam splitter. Moreover, the shearing beam splitter may direct a reference pulse copy to the spectrally resolved cross-correlation characterization system by mirror reflection rather than by aperture transmission.

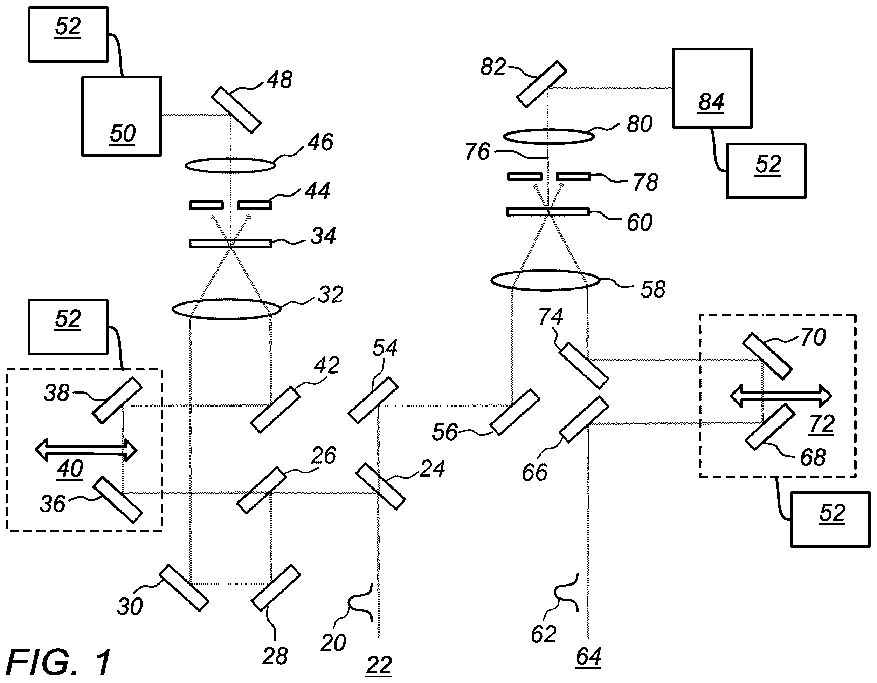

FIG. 1 schematically illustrates a preferred embodiment of a system providing FROG analysis of a reference pulse and X-FROG analysis of an unknown laser pulse using the reference pulse. Both FROG and X-FROG are particularly useful to analyze ultrafast or ultrashort laser pulses, which are commonly less than ten picoseconds in duration. Such pulses are sufficiently fast or short that they are not adequately captured by the fastest of currently available detectors and electronics. FROG and X-FROG analysis can also be used on different duration pulses, especially when it is desirable for the system to analyze a range of different pulse lengths. In the FIG. 1 implementation, a scanning FROG system is used as an example of self-referencing beam analysis. As discussed below, other self-referencing analysis systems such as single-shot FROG and SPIDER (spectral phase interferometry for direct electric-field reconstruction) might alternately be used to characterize the reference pulse. Similarly, the FIG. 1 illustration discusses a scanning X-FROG system as an example. Other spectrally resolved cross correlation systems might be used, including a single-shot implementation of X-FROG.

FIG. 1 shows the reference pulse 20 aligned to and directed into the system through a port 22. The reference pulse is incident on a first beam splitter 24, which splits the reference pulse 20 into a portion directed to the self-referencing (FROG) measurement and a portion directed to the cross-referencing (X-FROG) measurement. The beam splitter 24 directs the reference pulse 20 to a second beam splitter 26, which splits the reference pulse again within the FROG portion of the apparatus. One of the resulting reference pulses is directed by the beam splitter 26 to mirrors 28, 30 and to a directional optic 32. In this illustration the directional optic 32 is shown as a lens that directs the reference pulse to a nonlinear medium 34, but those of ordinary skill will appreciate that the function of the lens could also be performed by a mirror. Another portion of the reference pulse is directed through the beam splitter 26 to mirrors 36, 38, which are mounted on a computer-controlled delay stage 40, and via mirror 42 to the directional optic 32 to intersect with the undelayed reference pulse in the nonlinear medium 34. Mirrors 36, 38 are arranged such that the delay stage 40 can be translated without altering the optical path of the delayed reference pulse from the mirror 42 through the directional optic 32 to the nonlinear medium 34. The nonlinear medium 34 generally can be any nonlinear medium in which two beams interact. A particular example is any instantaneously responding χ⁽³⁾ or χ⁽²⁾ medium, but the nonlinear medium need not provide an instantaneous response to be used for many configurations and phase retrieval strategies.

The reference pulse and the delayed reference pulse are positioned to overlap within the nonlinear medium 34. The nonlinear medium 34 combines or multiplies the reference pulse and the delayed reference pulse to produce a signal shown propagating through the iris or beam dump 44. The nature of the signal, along with some examples of nonlinear materials that might be used are described in U.S. Patent No. 7,130,052, which is hereby incorporated by reference in its entirety. The beam dump 44 blocks the at-this-point unwanted reference and delayed reference pulses. Collection optic 46 receives the signal and focuses it through the mirror 48 into spectrometer 50. Collection optic 46 is shown as a lens but could be implemented as a mirror as well. Spectrometer 50 records the spectrum (intensity versus frequency) of the signal at the particular relative delay between the reference pulse and the delayed reference pulse and saves the resulting data to a memory within a controller or computer 52. The controller or computer 52 moves the delay stage 40 to another delay position and the spectrometer 50 collects the signal spectrum for each of the desired relative delays between the reference pulse and the delayed reference pulse. The collection of spectra at different delays (intensity versus frequency versus delay) constitutes a spectrogram for the reference pulse FROG measurement.

Controller/computer 52 preferably then performs two-dimensional phase retrieval on the stored spectrogram to characterize the reference pulse. The controller/computer 52 may, for example, use the principal components generalized projections (PCGP) strategy to characterize the pulse in the manner discussed in U.S. Patent No. 7,130,052, which is hereby incorporated by reference in its entirety. Alternately, the system may analyze the FROG spectrogram using ptychography or other two-dimensional phase retrieval strategies. An appropriate ptychography strategy is described in U.S. Patent No. 11,362,481 in the context of sonogram analysis, which is incorporated by reference in its entirety. When using ptychography, it is often possible to alter (lengthen) the delay interval between successive spectra, which can speed up the self-referencing measurement. Other phase retrieval strategies such as machine learning might also be used.

The resulting characterization (phase and amplitude) of the reference pulse is stored in the controller/computer 52 for use by the controller/computer 52 in analyzing the data obtained by the spectrally resolved cross-correlation characterization (e.g., X-FROG) system. FIG. 1 shows the controller/computer 52 distributed in several positions, which is a functional representation. Practical implementations preferably use a single controller or computer with wireless, wired or other connections to the apparatus components that communicate or receive signals or instructions, or otherwise interact with the controller or computer. The controller or computer 52 typically includes one or more processors, short-term and long-term memory, and various input/output functions connected to the various components shown in FIG. 1 that operate under computer control, are responsive to control signals or commands, or produce data or signals. Those of ordinary skill will appreciate that the processor in controller/computer 52 may be a general-purpose CPU, a microcontroller, a DSP, a GPU, a neural network, a machine learning system, or similar devices, or various combinations of these various devices.

Within the FIG. 1 system, the reference pulse 20 also passes to the X-FROG system by transmission through the beam splitter 24 to mirrors 54, 56, which direct this portion of the reference pulse 20 to directional optic 58, which steers the reference pulse to the nonlinear medium 60. In this illustration the directional optic 58 is shown as a lens, but those of ordinary skill will appreciate that the function of the lens could also be performed by a mirror. Most preferably, the FIG. 1 system passes the reference pulse to the X-FROG system using the same alignment, power, and other characteristics of the reference pulse as are used in providing the reference pulse to the FROG system. The respective copies of the reference pulses can have different amplitudes, as practical or as desired for the specific application.

The FIG 1 system also receives an unknown pulse 62 (such as an ultrafast laser pulse with unknown phase and/or intensity characteristics) aligned to and directed into the FIG. 1 system through a port 64. Mirror 66 directs the unknown pulse to mirrors 68, 70, which are mounted on delay stage 72, which is also controlled by controller/computer 52. Mirror 74 directs the unknown pulse from the delay stage 72 mirrors 68, 70 to the directional optic 58, which directs the unknown pulse to the nonlinear medium 60, where the unknown pulse can interact with the reference pulse. Mirrors 68, 70 are arranged such that the delay stage 72 can be translated without altering the optical path of the unknown pulse from the mirror 74 through the directional optic 58 to the nonlinear medium 60. The optics are preferably arranged to cause the reference pulse 20 to overlap with the unknown pulse 62 in the nonlinear medium 60. As discussed in U.S. Patent No. 9,423,307, which is hereby incorporated by reference in its entirety, the nonlinear medium 60 is selected to cause a multiplication or cross-correlation between the reference pulse and the unknown pulse.

The '307 patent states that the nonlinear medium used in an X-FROG process can be a second harmonic generation crystal, a polarization gating (Kerr effect) crystal, a self-diffraction material, or a third harmonic generation crystal. The non-linear medium for the X-FROG interaction is not limited to these examples. In fact, in some of the implementations discussed below, the nonlinear medium 60 for X-FROG is preferably a sum frequency generation (SFG) material or a difference frequency generation (DFG) material, although these may be the same or similar materials in practice, possibly using different crystal thicknesses and configurations. In some examples, the nonlinear medium 60 can be an instantaneously responding χ⁽³⁾ or χ⁽²⁾ medium that provides an instantaneous nonlinear interaction, but the medium 60 is not limited to an instantaneously reacting material. Regardless of the medium and interaction type, the nonlinear medium 60 effects a multiplication or cross-correlation between the reference pulse and the unknown pulse, which generates an interaction pulse shown as signal 76 in FIG. 1.

Signal 76 passes through the iris or beam dump 78, which blocks the unwanted reference and unknown pulses. Collection optic 80 receives the signal 76 and focuses it through the mirror 82 into spectrometer 84. Collection optic 80 is shown as a lens but could be implemented as a mirror as well. Spectrometer 84 records the spectrum (intensity versus frequency) of the signal at the particular relative delay between the reference pulse and the unknown pulse and saves the resulting data to a memory within controller/computer 52. The controller or computer 52 moves the delay stage 72 to another delay position and the spectrometer 84 collects the signal spectrum for each of the desired relative delays between the reference pulse and the unknown pulse. The collection of spectra at different delays (intensity versus frequency versus delay) constitutes a spectrogram for the unknown pulse X-FROG measurement.

Controller/computer 52 preferably then performs two-dimensional phase retrieval on the stored X-FROG spectrogram to characterize the unknown pulse, preferably using the phase and intensity characterization of the reference pulse previously stored in the controller/computer 52. The controller/computer 52 may, for example, use the modified principal components generalized projections (X-PCGP) strategy to characterize the unknown pulse in the manner discussed in U.S. Patent No. 9,423,307, which is hereby incorporated by reference in its entirety. Alternately, the system may analyze the X-FROG spectrogram using ptychography or other two-dimensional phase retrieval strategies. An appropriate ptychography strategy is described in U.S. Patent No. 11,362,481 in the context of sonogram analysis. Ptychography is natively compatible with X-FROG analysis because it preferably uses a fixed or known reference pulse data set for phase retrieval from unknown pulse data. Also, ptychography has the advantage of allowing the reduction in the number of different delay intervals used for the FROG and X-FROG measurements. Other phase retrieval strategies such as a machine learning strategy might also be used to analyze the cross-correlation spectrogram using information about the characterized reference pulse. The result of the X-PCGP, ptychographic, machine learning, or other analysis is the phase and the intensity of the unknown pulse.

In some implementations, the beam splitter 24 can be a plate or cube beamsplitter with appropriate dielectric coatings. While plate or cube beamsplitters preserve spatial beam quality, their beam splitting capabilities rely on dielectric coatings to reflect and transmit portions of the incident light. Typically, the plate or cube beamsplitter dielectric coatings impart different dispersions to the reflected and transmitted beams. As shown in FIG. 1, the primary beam splitter 24 passes a reflected reference pulse to the FROG system and passes a transmitted reference pulse to the X-FROG system. For sufficiently sensitive X-FROG measurements and retrievals, the beamsplitter dielectric layer imparts different dispersions in the reflected reference pulse and the transmitted reference pulse that are observable and are undesirable. In particularly preferred implementations with a premium placed on accuracy, the dispersion introduced by splitting the reference pulse should be the same for the split components of the reference pulse. Avoiding dispersion differences becomes more important as the pulse width is reduced. It is accordingly preferred for some implementations to use a beam splitter that provides different copies of the reference pulse with essentially no difference in dispersion between the copies.

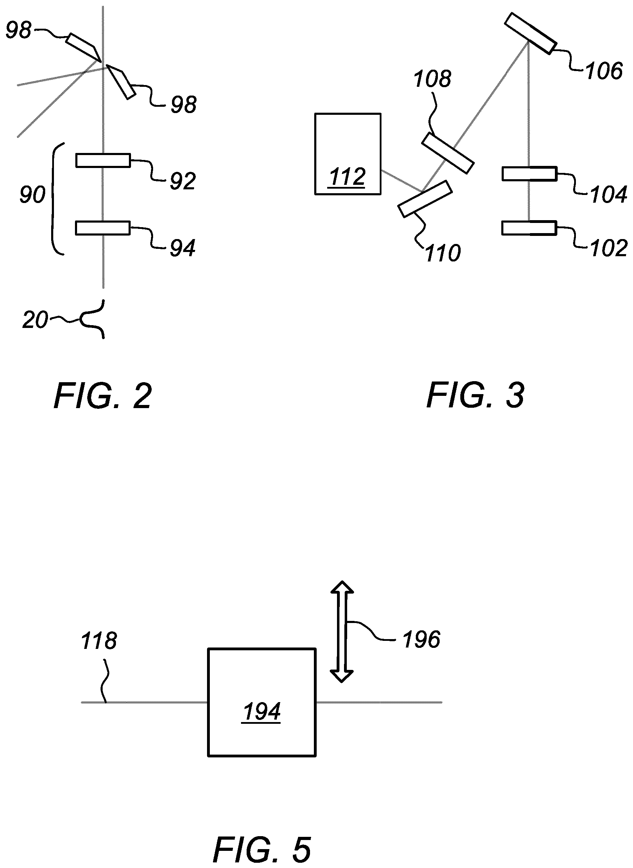

FIG. 2 shows a beam splitting arrangement that produces three copies of a reference pulse with no dispersion difference (virtually zero dispersion difference) between the three copies of the reference pulse. The reference pulse is incident on a cylindrical telescope 90 that expands the reference pulse horizontally. The cylindrical telescope may, for example, include a first cylindrical mirror 92 and a second cylindrical mirror 94 that in combination expand the reference pulse horizontally and also raises the level of the reference pulse. It is preferred to expand the reference pulse sufficiently to physically split the pulse into three components and it may, for example, be sufficient to horizontally expand the pulse by about a factor of two. The resulting pulse is oval in cross section. The expanded pulse then passes through a spatial shearing form of beam splitter. In this implementation, two D-mirrors 96, 98 are positioned with their straight, sharper edges near to each other, with an aperture between those edges. The two D-mirrors 96, 98 pick off lateral portions of the expanded reference pulse and direct them to components within the FROG system. The third, central copy of the reference pulse passes through the aperture to components of the X-FROG system. Preferably the D-mirrors have metal reflective surfaces or appropriate dielectric coatings that do not introduce dispersion differences to the reflected pulses.

Note that the FIG. 2 spatial shearing or zero dispersion beam splitter creates two copies of the reference pulse that can be used within the FROG system, which eliminates the need for the second beam splitter 26 within the FROG components. Spatial shearing produces diffraction artifacts but is still preferred as the metallic mirror or appropriate dielectric mirror coatings ensure virtually zero difference in dispersion between the three copies of the reference pulse. The diffraction artifacts can be mitigated so that they do not impact the temporal FROG measurements. The cylindrical mirrors 92, 94 used to expand the reference pulse might alternately be implemented using lenses, but the cylindrical mirror implementation provides a more achromatic and low dispersion solution. In this regard, when the illustrated cylindrical mirrors are used, they preferably have metallic or appropriate low- to no-dispersion dielectric coatings.

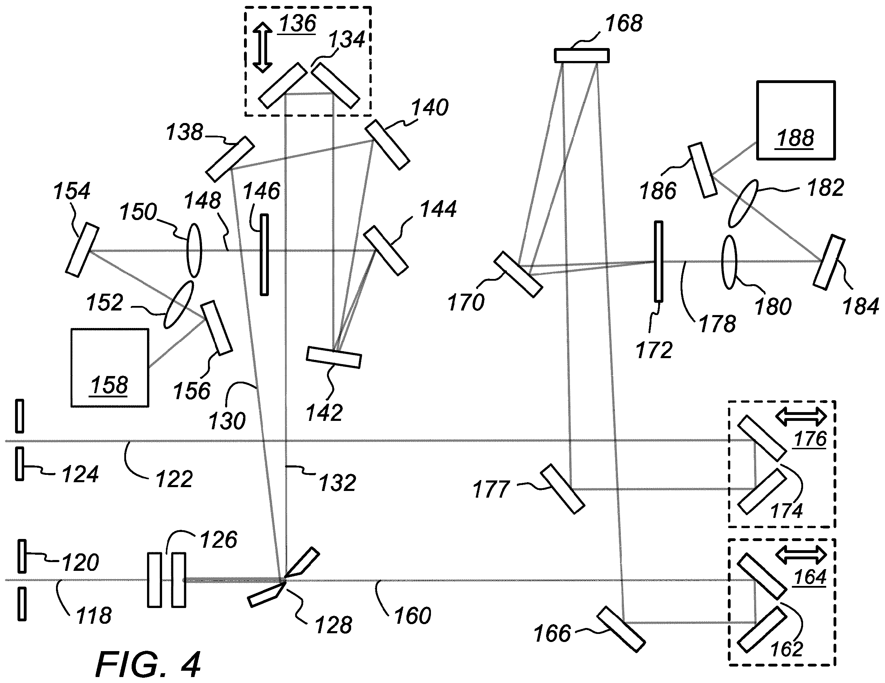

Another spatial shearing beam splitter can be implemented without laterally expanding the native, generally round, cross section of the reference beam. Square mirrors positioned on either side of the reference beam can be used to shear off portions of the native reference beam, producing three copies of the reference beam in the manner described above with reference to FIG. 2. The three copies have substantially zero dispersion difference because the mirrors have metal coatings or appropriate dielectric coatings that do not introduce dispersion to the reflected pulses. Similarly, two appropriate D-mirrors can be used to shear off portions of the native (unexpanded) reference beam to produce three copies of the reference beam. If the self-referencing characterization system does not use two copies of the reference pulse, then only one pickoff mirror might be used in the shearing beam splitter. Moreover, the shearing beam splitter may direct a reference pulse copy to the spectrally resolved cross-correlation characterization system by mirror reflection rather than by aperture transmission. Each of these alternative shearing beam splitters is used similarly in the FIG. 2 implementation in the apparatus and can be used as the primary beam splitter in either the FIG. 1 apparatus or in the FIG. 4 apparatus, discussed below.

When a spatial shearing or another zero dispersion difference beam splitter is used to split the reference pulse, the system preferably ensures that subsequent optics do not introduce dispersion differences, at least until the reference pulse is sensed by the interaction within the nonlinear medium. This can be accomplished, for example, by using metallic mirrors or other neutral reflection optics. Metallic mirrors are useful due to their availability and their broad, substantially uniform reflectivity over relevant wavelength ranges for ultrafast diagnostic systems. Appropriate dielectric mirror coatings that introduce little to no dispersion differences over relevant wavelength ranges are also commercially available. After the interaction within the nonlinear medium for both the FROG and X-FROG systems there is greater flexibility in optical implementations for different wavelength ranges and without introducing impactful dispersion differences.

At times, either the reference pulse or the unknown pulse, or both, may be wavelength tunable, which can change the output from the nonlinear media in the X-FROG system and which could require realignment. For example, when the wavelength of the unknown pulse is tuned to a new wavelength, the X-FROG interaction signal that results from the nonlinear interaction of the beams will be at a new wavelength and, in the typical configuration in which the reference and unknown pulses are not colinear, the X-FROG interaction signal will emerge at a new angle. It is preferable to be able to accommodate at least some range of wavelength changes without realignment or with limited realignment. To do so, either of the FROG or the X-FROG systems, or both, preferably incorporates a 4*f* image relay system between the nonlinear medium and the respective spectrometer (or detector), replacing the respective collection optic(s) 46, 80. A 4*f* image relay is illustrated in FIG. 3, schematically positioned between a nonlinear medium 102 that generates the signal (*i.e.,* the spectrum produced by the nonlinear medium multiplying a pulse with a delayed copy of itself or a delayed unknown pulse) and a spectrometer 112, which captures the spectrum of the signal. The 4*f* relay includes a first lens 104, a second lens 108, and a mirror 106, which is positioned at the Fourier plane defined at the focal lengths from the two lenses 104, 108. As is known in the art, the lenses 104, 108 can have different focal lengths, but in the FIG. 3 implementation the focal lengths are taken to be the same. Thus, the mirror 106 preferably is separated from each of the lenses by their common focal length.

The FIG. 3 4*f* image relay reproduces both spatial intensity (the observable image) and spatial phase. The spatial phase can be thought of as wavefront and direction. For the mirror 106 at the Fourier plane of the 4*f* image relay, tilting the mirror 106 shifts the signal beam's image position in the image plane. This allows for easy overlap of the signal's imaged focus on the spectrometer 112 slit. A second mirror 110 is placed just before the spectrometer 112 slit to provide adjustment of the signal beam direction onto the spectrometer 112 slit to maximize the light collected by the spectrometer. If the range of signal beam output angles falls within the range of input acceptance angles provided by the spectrometer's numerical aperture, adjustments to the second mirror should be unnecessary. Even for fixed wavelength pulses, as would often be the case for the reference pulse in the FROG system, the 4*f* image relay provides superior robustness to changes in input reference pulse alignment. In addition, the 4*f* relay facilitates quicker and easier realignment, when realignment is needed, because it decouples the signal beam position and signal beam direction for alignment into the spectrometer 112.

FIG. 4 shows another implementation of an apparatus including a FROG system and an X-FROG system. The FIG. 4 system is functionally similar to the FIG. 1 system, with a number of modifications to improve the quality of the spectrograms and to make the optical systems more robust. These include adopting a shearing form of (zero dispersion difference) beam splitter, such as that shown in FIG. 2 or discussed above, adopting the 4*f* image relay of FIG. 3 for the signal out of the nonlinear medium in both the FROG and X-FROG systems, and including a second translation stage in the X-FROG system to improve the spectral resolution of that measurement system. The reference pulse 118 enters the FIG. 4 system at port 120 and the unknown pulse 122 enters the system at port 124. The reference pulse 118 in this implementation passes through a cylindrical telescope 126 and is incident on a shearing beam splitter 128. Other shearing beam splitters, as discussed above, might alternately be used. The cylindrical telescope 126 may, for example, approximately double the horizontal width of the reference pulse 118, using components and operating the same as described above with respect to FIG. 2. Similarly, the shearing beam splitter 128 includes two D-mirrors separated by an aperture as illustrated in FIG. 2 and described above. The shearing beam splitter 128 functions similarly to produce three component copies from the input reference pulse 118, with zero dispersion difference between the component copies. The shearing beam splitter 128's preferred D-mirrors reflect two copies 130, 132 of the reference pulse to the FROG system and the aperture of the shearing beam splitter passes a third copy 160 of the reference pulse to optics within the X-FROG system. If a different characterization system is used in either of the FIG. 1 or FIG. 4 apparatus, a single mirror might be used as a shearing beam splitter to produce two copies of the reference pulse.

The self-referencing (here, FROG) characterization system within FIG. 4 receives one of the reference pulse copies 132 at a pair of mirrors 134 on a computer-controlled translation stage 136. The pair of mirrors 134 are planar mirrors positioned at a 90° angle to each other and positioned on the translation stage 136 so that translation of the stage does not alter the beam path of the reference pulse entering or leaving the pair of mirrors 134. Mirror 138 directs the other of the reference pulse copies 130 off a steering mirror 140 to focusing mirror 142, which directs the reference pulse copy 130 off planar mirror 144 to focus within the nonlinear medium 146. Similarly, the translation stage 136 and the pair of mirrors 134 direct the delayed copy 132 of the reference pulse to focusing mirror 142, off planar mirror 144 to focus within the nonlinear medium 146. The reference pulse copy and the delayed reference pulse copy overlap within the nonlinear medium 146 to produce a FROG signal 148. Here, as was discussed above with respect to the nonlinear medium 34 in FIG. 1, the medium 146 can be any appropriate nonlinear medium that multiplies or correlates the two copies of the reference pulse.

Preferably only reflective optics are used to direct the two copies of the reference pulse from the shearing beam splitter 128 to the nonlinear medium 146, which generates the signal and its associated spectrum. In this way the optics of the FROG system limit or preferably avoid introducing dispersion differences into these copies of the reference pulse, as compared to the copy 160 of the reference pulse that passes through the aperture of the shearing beam splitter 128.

The FROG signal 148 corresponding to the reference pulse and the delayed copy of the reference pulse is directed into a 4*f* image relay system including first and second lenses 150, 152 and a planar mirror 154 positioned at the Fourier plane defined by the focal lengths of the lenses 150, 152. Additional mirror 156 directs the signal into the spectrometer 158, which records the spectrum (intensity versus frequency) of the signal 148 at the particular relative delay between the reference pulse and the delayed reference pulse and saves the resulting data to a memory within a controller or computer (not shown in this illustration). The 4*f* image relay within the FROG system of FIG. 4 functions in the manner discussed above with respect to FIG. 3 and provides the robustness advantages discussed there. In addition, for a system in which the reference pulse is tunable or varies in wavelength, the 4*f* image relay within the FIG. 4 FROG system provides reduced sensitivity to changes in the position or direction of the FROG signal 148. As this may not be required, some implementations of the FIG. 4 FROG system may use simpler and more compact optics than the illustrated 4*f* image relay.

The controller or computer (not shown) moves the delay stage 136 to another delay position and the spectrometer 158 collects the spectrum for the FROG signal 148 corresponding to each of the desired relative delays between the reference pulse and the delayed reference pulse. The collection of spectra at different delays (intensity versus frequency versus delay) is the spectrogram for the reference pulse FROG measurement. The controller/computer preferably then performs two-dimensional phase retrieval on the stored spectrogram to characterize the reference pulse. The controller/computer may, for example, use the principal components generalized projections (PCGP) strategy to characterize the pulse in the manner discussed above and in U.S. Patent No. 7,130,052. In other implementations, the spectrogram can be analyzed using ptychography, using a machine learning strategy, or using another characterization strategy. The resulting characterization (phase and amplitude) of the reference pulse is stored in the controller/computer for use by the controller/computer in analyzing the data obtained by the X-FROG system.

The third copy 160 of the reference pulse passes through the shearing beam splitter 128 to a pair of mirrors 162 on a computer-controlled translation stage 164. The pair of mirrors 162 are planar mirrors positioned at a 90° angle to each other and positioned on the translation stage 164 so that translation of the stage does not alter the beam path of the reference pulse entering or leaving the pair of mirrors 162. The translation stage 164 and the pair of mirrors 162 direct the comparatively delayed reference pulse 160 off steering mirror 166 to focusing mirror 168 and from the focusing mirror 168 to steering mirror 170 to focus within the nonlinear medium 172. Here, as was discussed above with respect to the nonlinear medium 60 in FIG. 1, the medium 172 can be any appropriate nonlinear medium that multiplies or correlates the reference pulse and the unknown pulse. Both the reference pulse and the unknown pulse are often ultrafast laser pulses.

The unknown pulse 122 passes through port 124 to a pair of mirrors 174 on a computer-controlled translation stage 176. The pair of mirrors 174 are planar mirrors positioned at a 90° angle to each other and positioned on the translation stage 176 so that translation of the stage does not alter the beam path of the reference pulse entering or leaving the pair of mirrors 174. The translation stage 176 and the pair of mirrors 174 direct the delayed unknown pulse 122 off steering mirror 177 to focusing mirror 168 and from the focusing mirror 168 to steering mirror 170 to also focus within the nonlinear medium 172. The spectrally resolved cross-correlation characterization (e.g., X-FROG) system of FIG. 4 includes two translation stages, one for each of the reference pulse and the unknown pulse. Generally only one translation stage is needed in a scanning X-FROG implementation to obtain an X-FROG spectrogram corresponding to the reference pulse and the unknown pulse. Here two translation stages are provided so that the system can provide a greater range of delays between the reference pulse and the unknown pulse, which in turn provides greater spectral resolution to the X-FROG measurement. This is because the spectral resolution of X-FROG deconvolutions is determined by the time delay used in the cross-correlation much like a Fourier transform spectrometer. Unlike a Fourier transform spectrometer, the X-FROG measurement does not require interferometric stability.

Preferably only reflective optics are used to direct the reference pulse from the shearing beam splitter 128 to the nonlinear medium 172, where the reference pulse 160 interacts with the unknown pulse 122 to generate the signal 178 and its associated spectrum. In this way the optics of the X-FROG system limit or preferably avoid introducing dispersion differences into this copy of the reference pulse.

The reference pulse and the unknown pulse overlap within the nonlinear medium 172 to produce a cross-correlation interaction (e.g., X-FROG) signal 178. The cross-correlation interaction signal 178 corresponding to the reference pulse 160 and the unknown pulse 122 is directed into a 4*f* image relay system including first and second lenses 180, 182 and a planar mirror 184 positioned at the Fourier plane defined by the focal lengths of the lenses 180, 182. The 4*f* image relay preferably used in this portion of the X-FROG system functions in the manner discussed above with respect to FIG. 3 and provides robustness and reduces sensitivity to changes in the wavelength of the unknown pulse such as might occur by tuning the unknown pulse source. Of course, the 4*f* image relay also reduces sensitivity to changes in the wavelength of the reference pulse as well. Steering mirror 186 directs the cross-correlation interaction signal 178 into the spectrometer 188, which records the spectrum (intensity versus frequency) of the cross-correlation interaction signal 178 at the particular relative delay between the reference pulse and the unknown pulse and saves the resulting data to a memory within a controller or computer (not shown in this illustration). The controller or computer moves the delay stage 164 or the delay stage 176 to another delay position and the spectrometer 188 collects the spectrum for the cross-correlation interaction signal 178 corresponding to each of the desired relative delays between the reference pulse and the unknown pulse. The collection of spectra at different delays (intensity versus frequency versus delay) is the spectrogram for the cross-correlation interaction measurement of the unknown pulse.

The controller or computer (not shown) preferably then performs two-dimensional phase retrieval on the stored X-FROG or other spectrogram to characterize the unknown pulse, preferably using the phase and intensity characterization of the reference pulse 118 previously stored in the controller/computer. The controller/computer may, for example, use the modified principal components generalized projections (X-PCGP) strategy to characterize the unknown pulse in the manner discussed in U.S. Patent No. 9,423,307, which is hereby incorporated by reference in its entirety. Alternately, the system may analyze the X-FROG spectrogram using ptychography, machine learning, or other two-dimensional phase retrieval strategies, each using the known characterization of the reference pulse to facilitate the analysis. An appropriate ptychography strategy is described in U.S. Patent No. 11,362,481 in the context of sonogram analysis, which is hereby incorporated by reference in its entirety. Further discussion of ptychography can be found, for example, in D. Spangenberg, et al., "Ptychographic Ultrafast Pulse Reconstruction," Optics Lets., Vol. 40, pp. 1002-1005, 2015, which article is incorporated by reference in its entirety. When using ptychography, it is often possible to alter (lengthen) the delay interval between successive spectra, which can speed up the spectrally resolved cross-correlation measurement. The result of inversion, X-PCGP, ptychography, or machine learning analysis is the phase and the intensity of the unknown pulse.

Those skilled in the art are aware that FROG, such as second harmonic generation FROG, is ambiguous as to the direction of time. Understanding the direction of time can be important when, for example, the user wishes to modify the unknown pulse using chirp to produce predictable results. In a preferred aspect of some embodiments, the direction of time in a measurement can be determined using X-FROG. Phase retrieval of an X-FROG spectrogram is performed using one sense of the direction of time. The direction of time is then reversed and phase retrieval is performed again. Whichever phase retrieval has the lower error corresponds to the correct time direction. This function can be incorporated in the host software to be performed automatically or, more preferably, when the user triggers the check through the control program.

In a practical implementation, the FIG. 4 system may use an ytterbium doped silica fiber laser to provide a reference pulse output at approximately 1030 nanometers. The reference pulse generating laser is provided outside of the FROG and X-FROG systems; it is generally not a permanent part of the FIG. 1 or FIG. 4 systems. For this reference pulse, and many other implementations where greater sensitivity is preferred, the FROG nonlinear medium 146 can be selected to be one appropriate for a second harmonic generation (SHG) type of nonlinear interaction. SHG FROG is more sensitive as compared to, for example, polarization gate FROG. For SHG operation, the nonlinear medium 146 can be, for example beta barium borate (BBO). The unknown pulse in this example was in the ultraviolet (UV) near 258 nanometers based on the frequency quadrupled output from a near infrared beam such as that used as the reference pulse. The illustrated system can also be used to characterize other ultraviolet unknown pulses. The nonlinear interaction and configuration selected for this particular X-FROG implementation is difference frequency generation (DFG) using a BBO crystal as a nonlinear medium. The resulting difference frequency signal 178 has a wavelength of about 343 nanometers.

Because the cross-correlation interaction signal from the X-FROG measurement is at 343 nanometers, which is just shorter than the visible range, it is possible to use commercially available spectrometers with conventional silicon detectors and optics to capture the signal's spectrum. That is, the same spectrometer can be used in the FIG. 4 FROG system and the FIG. 4 X-FROG system in this measurement of an ultrafast ultraviolet pulse. This makes the phase and intensity measurement of an ultraviolet ultrafast laser pulse practical.

Similarly, the FIG. 4 apparatus can be used to characterize middle infrared ultrafast pulses. Middle infrared ultrafast pulses at wavelengths of 4 micrometers and 11 micrometers can be generated using commercially available optical parameteric amplifiers. Such pulses can be input to the FIG. 4 apparatus as the unknown pulse. A similar reference pulse at about 1030 nanometers can be used. For this configuration, the non-linear interaction is selected to be frequency summation and a sum frequency generation (SFG) medium such as silver gallium sulfide (AgGaS₂ or AGS), with appropriate geometry and alignment, is used for the nonlinear medium 146. The resulting sum frequency will be near the reference pulse wavelength of 1030 nanometers and so the middle infrared ultrafast pulses can also be characterized using commercially available spectrometers with conventional silicon detectors and optics. Other nonlinear materials can be used for greater sensitivity in different wavelength ranges. AgGaS₂ has a useful range of about one half micron to more than thirteen microns.

The ultraviolet and middle infrared applications show the wide range of frequencies to which the combined apparatus can applied, with little to no alteration to the FIG. 4 apparatus. It may be desirable to use different nonlinear media for specific applications, which can be readily accomplished because the nonlinear media are typically mounted within cartridges that are easily removed and replaced. In other configurations, the angle of the nonlinear material preferably may be adjusted, using a computer-controlled rotation stage. Typically no other modification or realignment is needed for the FIG. 4 device between the ultraviolet, visible, or middle infrared applications. Generally the nonlinear material and configuration is chosen to move the signal output wavelength closer to the visible, where more numerous and less costly optical components are available. For example, when an unknown pulse to be characterized is in the ultraviolet, the nonlinear interaction is chosen to be difference frequency generation (DFG) and a suitable wavelength for the reference pulse is selected. When an unknown pulse to be characterized is in the infrared, the nonlinear interaction preferably is chosen to be sum frequency generation (SFG) and a suitable wavelength is selected for the reference pulse to position the output signal in the visible or near visible range.

The ultrafast laser and other light sources discussed here are typically operated in pulsed fashion. Various sources can be used as the reference pulse in these applications. In addition to the near infrared operation of the ytterbium doped silica fiber laser discussed above, the FIG. 1 and FIG. 4 systems have used the more powerful Ti:sapphire (sapphire doped with titanium) laser output at about 800 nanometers. Throughout this discussion, optics, optical, light, and pulses are used in their broad sense to include ultraviolet, visible, and infrared wavelengths, so long as appropriate sources, detectors (preferably including spectrometers), and nonlinear media are available and amenable to FROG and X-FROG strategies.

For both of the ultraviolet and the middle infrared illustrations discussed here, the reference pulse is characterized using the self-referencing characterization (e.g., FROG or other) system on a regular, repeated basis to ensure fidelity of the spectrally resolved cross-correlation (e.g., X-FROG or other) measurement and phase retrieval. Preferably, a characterization of the reference pulse can be triggered manually through the software interface. For example, a user might choose to initiate a reference pulse characterization when the quality of the X-FROG retrieval diminishes. On the other hand, the controller or computer may automatically trigger regular characterizations based on time lapse or on the number of X-FROG measurements made. In some instances, the apparatus may characterize the reference pulse for every spectrally resolved cross-correlation measurement. The nature of the FIG. 1 and FIG. 4 systems allows for the generally simultaneous measurement of the reference pulse in the self-referencing system and the unknown pulse in the X-FROG system. This is particularly useful when a delay stage or delay line is used to provide successive delays between pulse measurements in one or both of the analysis systems. Similarly, overlapping time periods are beneficial because typical implementations make measurements by averaging over multiple individual pulse repetitions to improve the signal measurements. Thus it is preferable to collect the respective self-referencing interaction signals and the cross-correlation interaction signals over largely overlapping time periods. Typically, the analysis of the respective reference pulse data set (a spectrogram or other characterization data set) and cross-correlation interaction data set (a X-FROG spectrogram or other cross-correlation data set) are performed sequentially, as the cross-correlation interaction analysis preferably uses the results of the reference pulse characterization.

The above description has focused on a scanning FROG system as an example of a self-referencing characterization strategy for the reference pulse in the FIG. 1 and FIG. 4 systems. Other self-referencing strategies can be used. For example, single shot FROG systems do not use a delay stage with data collected at multiple delays. Rather, single shot FROG systems direct two copies of a reference beam at different angles at a nonlinear medium so that the two copies overlap over an extended, generally linear area so that the two copies of the reference pulse have different relative delays (or advancements) along the area of overlap. Various nonlinear media, as discussed above, can be used for the single shot FROG system. The single shot FROG system may, for example, use a spectrometer to spread the spectral output from the nonlinear medium and then use a two-dimensional detector array to capture the resulting spectrogram. Analysis of the spectrogram proceeds using the strategies discussed above for the scanning FROG spectrogram. Further information on a single shot FROG can be found, for example, in U.S. Patent No. 5,754,292, entitled "Method and Apparatus for Measuring the Intensity and Phase of an Ultrashort Pulse," which patent is incorporated by reference in its entirety.

When single shot FROG is used as the self-referencing characterization of the reference pulse, the single shot FROG system receives a reference pulse copy from the beam splitter 24 (FIG. 1) or one or more reference pulse copies from the beam splitter 128 (FIG. 4), with another copy of the reference pulse provided to the spectrally resolved cross-correlation system discussed above with reference to FIGS. 1 and 4. The single shot FROG generally has poorer spectral resolution than scanning FROG. Single shot FROG is also not capable of analyzing the wide range of pulse durations that scanning FROG allows. Single shot FROG nevertheless can produce acceptable ultrafast reference pulse characterizations. The resulting characterization of the reference pulse (intensity and phase) can be used in analysis of the X-FROG spectrogram in the manner discussed above.

Other self-referencing characterization techniques could be used instead of the scanning FROG or single shot FROG systems discussed above. Another self-referencing characterization strategy is called spectral phase interferometry for direct electric-field reconstruction (SPIDER). The SPIDER technique is described, for example, in C. Iaconis and I. Walmsley, "Self-Referencing Spectral Interferometry for Measuring Ultrashort Optical Pulses," IEEE J. Quantum Electron., vol. 35, pp. 501-509, 1999, which is incorporated by reference in its entirety. The SPIDER technique is also described and illustrated in U.S. Patent No. 6,611,336, entitled "Pulse Measurement using Frequency Shifting Techniques," which patent is also incorporated by reference in its entirety. The SPIDER strategy creates a pair of signal pulses separated by a delay and a third pulse is dispersed to, for example, create a chirped pulse. A nonlinear crystal mixes the two signal pulses with different portions of the chirped pulse and outputs an interferogram, which can be analyzed in a direct (non-iterative) manner to retrieve the phase of the input pulse. Variations on the basic SPIDER system described here are known and may also be used as the self-referencing characterization strategy in the apparatus of FIGS. 1 or 4.

When a SPIDER system is used as the self-referencing characterization of the reference pulse, the SPIDER system receives a reference pulse copy from the beam splitter 24 (FIG. 1) or one or more reference pulse copies from the beam splitter 128 (FIG. 4), with another copy of the reference pulse provided to the X-FROG system discussed above with reference to FIGS. 1 and 4. SPIDER systems are often limited to measuring short pulses (less than 100 fsec) and perform poorly when the pulse bandwidth is reduced. Nevertheless, SPIDER systems can adequately characterize an ultrafast reference pulse for use in the apparatus of FIG. 1 or FIG. 4 within these constraints. The resulting SPIDER data set characteristic of the reference pulse is different from the spectrograms discussed above and is analyzed differently. The resulting characterization of the reference pulse (intensity and phase) is directly useable in the X-FROG spectrogram analysis discussed above.

The scanning X-FROG system discussed above might alternately be implemented as a single shot X-FROG system. Single shot X-FROG is an example of another spectrally resolved cross-correlation system. Such single shot X-FROG systems do not use a delay stage (or multiple delay stages) with data collected at multiple delays. Rather, single shot X-FROG systems direct a copy of a reference beam and an unknown beam through different angles to a nonlinear medium so that the reference beam copy and the unknown beam overlap over an extended, generally linear area so that different portions of the reference beam have different relative delays (or advancements) with different portions of the unknown beam along the area of overlap. Various nonlinear media, as discussed above, can be used for the single shot X-FROG system. The single shot X-FROG system may, for example, use a spectrometer to spread the spectral output from the nonlinear medium and then use a two-dimensional detector array to capture the resulting spectrogram. Analysis of the spectrogram proceeds using the strategies discussed above for the scanning X-FROG spectrogram. Further information on a single shot FROG can be found, for example, in U.S. Patent No. 5,754,292, entitled "Method and Apparatus for Measuring the Intensity and Phase of an Ultrashort Pulse," which patent is incorporated by reference in its entirety.

The single shot X-FROG system has some advantages, often including lower cost because the single shot X-FROG system does not use a voice coil, precision translation stage, which is currently a comparatively expensive component. Another way that apparatus costs can be reduced, but while retaining many of the advantages of the scanning X-FROG, is to use a single translation stage shared between a scanning FROG reference pulse characterization system and a scanning X-FROG unknown pulse characterization system. In such an apparatus, a single scanning stage is used in a time multiplexed manner between the FROG and X-FROG measurements to provide the relative delays for the respective measurements. For this implementation, the translation stage may delay a copy of the reference beam for either of the measurements. The computer or controller tracks which measurement the translation stage is being used for at a particular time.

One challenge observed in the measurement of some pulses is that ultrafast pulses that a user might wish to characterize can be spectrally narrow. This has been observed, for example with ultraviolet pulses that can be too spectrally narrow to be accurately characterized by the FROG (or other self-referencing) system because it would require an impractically small spectrometer resolution. FROG analysis of such a spectrally narrow ultrafast pulse typically requires a physically large spectrometer and comparatively high intensities. This spectral resolution limitation can be addressed by using an X-FROG system and selecting a broader reference pulse signal to characterize the narrow unknown pulse in the X-FROG measurement. This is because the X-FROG nonlinear interaction acts as a convolution between the narrow unknown pulse and the broader reference pulse, with the result that the output signal has the spectral breadth of the broader reference pulse.

When the unknown pulse is too spectrally narrow, an X-FROG system can effectively analyze a too spectrally narrow unknown pulse by selecting and using a broader reference pulse. The user may note the too narrow unknown pulse from a phase retrieval failure, for example. The user then selects a new reference pulse sufficiently spectrally broader than the unknown pulse as to yield acceptable measurements. This may be accomplished by selecting a sufficiently broader (compared to the narrow unknown pulse) reference pulse source or by changing the nature of the reference pulse. One strategy for changing the nature of the reference pulse is by selectively spectrally broadening the reference pulse through self-phase modulation within an optical fiber using, for example, the Kerr effect. Under this effect, a reference pulse with suitably short duration and sufficient high intensity will exhibit spectral broadening when passing through a length of optical fiber. The pulse conditioner that performs spectral broadening can then be implemented using optics to couple the reference pulse into a length of fiber followed by optics to couple the conditioned reference pulse out of the length of fiber. The entire assembly can be mounted on a kinematic mount that allows the spectral broadening pulse conditioner to be placed or removed from the optical path of the reference beam as needed by an apparatus user. Alternatively, the pulse conditioner could be provided on a translation stage that can be moved into and out of the optical path under computer or controller control.

Another application of pulse conditioning is to temporally broaden a reference pulse to facilitate measurement of temporally long unknown pulses. The problem this pulse conditioner addresses arises as follows. Executing a proper X-FROG measurement (for some retrieval strategies) requires sampling the entire duration of the unknown pulse. If the unknown pulse has a temporal length of 60 picoseconds and the reference pulse is 200 femtoseconds in duration, at least 300 steps are required to sample the unknown pulse. Each of the steps proceeds by incrementing the position of one or more of the delay stages, causing the reference pulse and the comparatively delayed unknown pulse to interact and then capturing the signal spectrum for that comparative delay. This process is repeated for each of the delay positions to build up a reliable spectrogram. Other configurations can result in the need to implement over 1000 steps, which can be time consuming and can be cumbersome for the phase retrieval analysis. It is thus sometimes useful to increase the duration of the reference pulse to be able sample the entirety of the unknown pulse with fewer steps.

FIG. 5 schematically shows a pulse conditioner that could be incorporated into the system of FIG. 4. The pulse conditioner 194 is positioned after the reference pulse 118 is introduced into the FIG. 4 system and prior to the beam splitter 128 and its associated optics 126. In this way the pulse conditioner, which is expected to introduce dispersion to the reference pulse, interacts with the reference pulse before it is possible to introduce dispersion differences into copies of the reference pulse. In the FIG. 5 illustration, the pulse conditioner 194 is mounted on a computer (not shown here) controlled translation stage 196 that allows the pulse conditioner to be moved out of the path of the reference pulse 118 when it is not needed or wanted. In the alternative, the pulse conditioner could be provided on a kinematic mount so that it can be readily placed along or removed from the optical path of the reference beam by a user as needed. Kinematic mounts are commercially available, for example, from Thorlabs, Inc. or Newport Corp. Particularly simple pulse conditioners such as interference filters, band pass filters, and plain pieces of glass can be removably mounted along the optical path of the reference beam. For example, such conditioning elements might be mounted in a quick release optic mount that can be readily removed from or replaced onto a base optical mount component in a reliable and aligned manner. Appropriate mounts are commercially available from Thorlabs, Inc.

In some preferred implementations, the reference pulse may be conditioned by filtering or selectively temporally broadening using a pulse shaper such as those sold by Coherent, Inc., under the Finisar WaveShaper brand. Often such a pulse shaper is implemented in a 4*f* configuration, where optics expand the pulse onto the pulse shaper, after which the modified pulse is collected by additional optics. The optics are arranged so that the pulse shaper is at the Fourier plane of both sets of optics and may thus function as a spectral filter. The pulse shaper itself is a spatial light modulator (SLM) based on a computer controlled liquid crystal array. A similar pulse shaper is described in the above-discussed M. Guesmi, et al., "Targeted Generation of Complex Temporal Pulse Profiles," Sci. Rep. (www. nature.com), vol. 12, 3827, 2022, downloaded from https://doi.org/10.1038/s41598-022-07875-0 article. For some applications the pulse conditioner can be a far simpler element. For example, if the pulse conditioner 194 is intended only to temporally broaden a reference pulse, then almost any dispersive device or material would suffice including, for example, a sufficiently thick piece of glass.

Still another form of pulse conditioner provides amplification to a too-weak reference pulse. An appropriate amplifier may be a fiber amplifier and can be implemented along the reference beam optical path like the fiber spectral broadening system described above.

Regardless of the type of pulse conditioner contemplated, one typical application would proceed as follows. The system begins, for example, with no pulse conditioner in the reference beam optical path. The user executes a FROG analysis of the reference pulse and an X-FROG analysis of an unknown pulse and processes the data sets through a preprogrammed phase analysis strategy. The user might note a problem with the phase analysis in that it does not converge, converges too slowly, or provides phase information with an unusually high level of error for example as illustrated by the X-FROG trace error. The user then may select an appropriate pulse conditioner to change the physical characteristics of the reference pulse and install that pulse conditioner within the reference beam optical path. The pulse conditioner may be manually placed or may be positioned under computer control using a translation stage, as just two illustrative examples. The user then proceeds to perform further FROG and X-FROG analyses, possibly introducing other pulse conditioning elements, until the system provides adequate quality data and phase retrieval. This process can be operated in a fully automated fashion, if that is desired.

An important aspect of the X-FROG configuration is that the spectral resolution of the device is not determined by the resolution of the spectrometer. Rather, the spectral resolution is determined by the temporal span of the delays used in generating the spectrogram. The double delay stages within the X-FROG portion of the FIG. 4 implementation presents an extreme example, but even with a single delay stage, the FIG. 4 implementation provides spectral resolution greater than the resolution of the spectrometer 188 in FIG. 4 (as measured in Hertz). It remains important to have a low jitter for the digitization of the signal spectrum.

There is literature that argues that the terms "FROG" or X-FROG" dictate that the measurement system must have a specific sampling interval and that these terms are limited to a particular phase retrieval scheme. The present discussion does not use these terms in such a limited sense and instead use the terms more generally. As one particular example, when a preferred apparatus implements a FROG characterization system and an X-FROG characterization system, either or both of the characterization systems may accomplish phase retrieval using ptychography. With ptychography, a user may within limits independently select the number and spacing of delay intervals used in acquiring the respective systems data sets.

Although the invention has been described in detail with particular reference to these preferred embodiments, other embodiments can achieve the same results. Variations and modifications of the present invention will be apparent to those skilled in the art. The present invention is not defined by the various embodiments described here but is instead defined by the claims, which follow.

## Claims

1. An optical apparatus for characterizing ultrafast pulses comprising:
a first entrance port (22, 120) that receives one or more reference pulses (20, 118);
a beam splitter (24, 128) positioned to receive the one or more reference pulses (20, 118) from the first entrance port (22, 120), the beam splitter (24, 128) splitting each reference pulse (20, 118) into at least two copies (130, 132, 160);
a self-referencing characterization system positioned to receive one or more reference pulse copies (130, 132) from the beam splitter (24, 128), the self-referencing characterization system configured to optically process the one or more reference pulse copies (130, 132) to generate a reference interaction signal characteristic of the one or more reference pulses (20, 118), the self-referencing characterization system providing the reference interaction signal (148) to a reference detector (50, 158) that converts the reference interaction signal (148) to an electrical reference interaction signal;
a second entrance port (64, 124) that receives one or more unknown pulses (62, 122);
a spectrally resolved cross-correlation characterization system positioned to receive one or more reference pulse copies (20, 160) from the beam splitter and to receive one or more unknown pulses (62, 122) provided through the second entrance port (64, 124), the spectrally resolved cross-correlation characterization system comprising a nonlinear medium (60, 172), the spectrally resolved cross-correlation characterization system optically processing the one or more reference pulse copies (160) and the one or more unknown pulses (62, 122) to cause the one or more reference pulse copies (20, 160) and the one or more unknown pulses (62, 122) to interact within the nonlinear medium (60, 172) to produce a cross-correlation interaction signal (76, 178), and the spectrally resolved cross-correlation characterization system directing the cross-correlation interaction signal (76, 178) to an interaction detector (84, 188) that converts the interaction signal to an electrical cross-correlation interaction signal.

2. The optical apparatus of claim 1, wherein the beam splitter is a shearing beam splitter (128).

3. The optical apparatus of one of the preceding claims, wherein the beam splitter (128) comprises:
an aperture to pass a portion of the reference pulse (20, 160) along to the spectrally resolved cross-correlation characterization system;
a first splitter mirror (98) to direct a first portion of the reference pulse along a first optical path to the self-referencing characterization system; and
a second splitter mirror (98) to direct a second portion of the reference pulse along a second optical path to the self-referencing characterization system.

4. The optical apparatus of one of the preceding claims, wherein the self-referencing characterization system is a frequency resolved optical gating (FROG) system and wherein the reference interaction signal is a portion of a spectrogram.

5. The optical apparatus of one of the preceding claims, wherein the spectrally resolved cross-correlation characterization system is a cross-correlation frequency resolved optical gating (X-FROG) system and wherein the cross-correlation interaction signal (76, 178) is a portion of an X-FROG spectrogram.

6. The optical apparatus of claim 5, further comprising a memory that stores a characterization of the one or more reference pulses (20, 118) and a processor that extracts a phase from the X-FROG spectrogram using the characterization of the one or more reference pulses (20, 118).

7. The optical apparatus of one of the preceding claims, wherein the self-referencing characterization system comprises a self-referencing non-linear medium (34, 146) separate from the nonlinear medium (60, 172) of the spectrally resolved cross-correlation characterization system.

8. The optical apparatus of one of the preceding claims, further comprising a conditioner fixture (194) adapted to be positioned (196) along an optical path of the reference pulse (118) prior to the beam splitter, the conditioner fixture (194) adapted to place a pulse conditioner in the optical path to alter a physical characteristic of the reference pulse (118) passing through the pulse conditioner.

9. The optical apparatus of one of the preceding claims, wherein the cross-correlation interaction detector (84, 188) is a spectrometer and the unknown pulse (62, 122) has a spectral bandwidth (in Hertz) smaller than a spectral resolution of the spectrometer (in Hertz).

10. The optical apparatus of one of the preceding claims, further comprising a trigger that initiates a characterization of the reference pulse by the self-referencing characterization system that results in generation of the reference information.
